# EUROPÄISCHE PATENTSCHRIFT

(11) **EP 2 742 517 B1**
(45) Veröffentlichungstag und Bekanntmachung des Hinweises auf die Patenterteilung: **12.08.2015**
(21) Anmeldenummer: 12727841.4
(22) Anmeldetag: 11.06.2012
(51) Int. Cl.: H01F 7/08, H01F 7/129, F02M 51/06

(54) **MAGNETANKER FÜR EINSPRITZVENTIL**
SOLENOID ARMATURE FOR AN INJECTION VALVE
INDUIT MAGNÉTIQUE POUR SOUPAPE D'INJECTION

(30) Priorität: 09.08.2011 DE 102011080693
(43) Veröffentlichungstag der Anmeldung: 18.06.2014
(73) Patentinhaber: Robert Bosch GmbH, 70442 Stuttgart (DE)
(72) Erfinder: SCHUMACHER, Matthias, 71287 Weissach (DE); BURGHARDT, Andreas, 70176 Stuttgart (DE); RAGER, Jochen, 72406 Bisingen (DE)
(86) Internationale Anmeldenummer: PCT/EP2012/061015
(87) Internationale Veröffentlichungsnummer: WO 2013/020740

(56) Entgegenhaltungen:
- EP-A1- 2 172 641
- DE-A1- 4 415 850
- DE-A1-102009 055 156
- US-A1- 2006 097 210

## Beschreibung

### Stand der Technik

Die vorliegende Erfindung betrifft einen Magnetanker für ein Kraftstoffeinspritzventil.

Kraftstoffeinspritzventile des Standes der Technik, wie sie z. B. in Einspritzanlagen für Benzinmotoren eingesetzt werden, sind beispielsweise als Magnetschaltventile mit einer Spule und einem Magnetanker aufgebaut, der aus einem ferritischen, magnetischen Material ausgebildet ist und mit einer harten nichtmagnetischen Oberflächenschicht, z. B. aus Chrom, versehen ist. Dadurch kommt es bauartbedingt beim Aufbau und Abbau des Magnetfelds im Betrieb zu Wirbelstromverlusten und demzufolge zu einer Minderung der Schaltzeit bzw. Dynamik des Kraftstoffeinspritzventils. Zudem ist die Fertigung des Magnetankers sehr kostenintensiv und aufwendig. Außerdem ist die Beständigkeit gegenüber aggressiven Medien, wie z. B. Ethanol oder Harnstoff, die in den Kraftstoffen zunehmend enthalten sind, unzureichend, um eine befriedigende Dauerhaltbarkeit der Einspritzventile auch in Ländern mit starken Schwankungen bei der Kraftstoffqualität zu gewährleisten. Ferner ist die Einhaltung gesetzlicher Vorschriften, insbesondere hinsichtlich der Verwendung von gesundheitsgefährdenden Materialien, zukünftig sicherzustellen.

Aus der DE 10 2009 055 156 A1 ist bereits ein Magnetventil, insbesondere für Kraftstoffeinspritzanlangen von Brennkraftmaschinen in Kraftfahrzeugen, bekannt, das mit einer koaxial angeordneten und axial verschiebbar geführten Ventilnadel und mit einem Elektromagneten zur Hubbetätigung der Ventilnadel ausgeführt ist. Der Elektromagnet weist dabei einen inneren Magnetkern, eine Magnetspule und einen dem Magnetkern axial gegenüberliegenden Magnetanker auf, wobei der Magnetanker an der Ventilnadel angeordnet ist. Der Magnetanker ist zumindest teilweise als Hohlzylinder mit einer eine Wanddicke aufweisenden Wand ausgebildet und weist einen sich in axialer Richtung in der Wand erstreckenden ersten Bereich auf, wobei der erste Bereich im Wesentlichen aus einem elektrisch nichtleitenden Material gefertigt ist, wobei das nichtleitende Material im Wesentlichen eine vergleichsweise geringe elektrische Leitfähigkeit aufweist.

### Offenbarung der Erfindung.

Der erfindungsgemäße Magnetanker mit den Merkmalen des Anspruchs 1 weist demgegenüber den Vorteil auf, dass dieser einen wirbelstromminimierten und effizienzgesteigerten Magnetkreis aufweist, der eine höhere Dynamik mit kurzen Schaltzeiten des Ventils realisierbar macht. Ferner wird durch die Verwendung geeigneter Materialien eine verbesserte Robustheit bzw. Verschleißfestigkeit und ein Schutz gegenüber aggressiven Medien, wie z. B. Ethanol usw., geschaffen. Dies wird erfindungsgemäß dadurch erreicht, dass der Magnetanker wenigstens einen magnetischen Bereich und wenigstens einen nichtmagnetischen Bereich umfasst. Hierbei ist der Magnetanker als einstückiges Pulver-Spritzguss-Bauteil ausgebildet und die magnetischen und nichtmagnetischen Bereiche sind stoffschlüssig mittels eines Zweikomponenten-Pulver-Spritzgussverfahrens miteinander verbunden, wobei der magnetische Bereich vom nichtmagnetische Bereich vollständig umschlossen. Dadurch kann die Fertigung des einstückigen Magnetankers als ZweikomponentenPulverspritzguss-Bauteil auf einfache Weise in einem einzigen Prozessschritt zeit- und kostenoptimiert als Massenteil realisiert werden. Das ZweikomponentenPulverspritzgussverfahren beinhaltet dabei einen Keramik-Spritzgussschritt (Ceramic Injection Molding, CIM) und/oder einen Metallpulver-Spritzgussschritt (Metal Injection Molding, MIM).

Die Unteransprüche zeigen bevorzugte Weiterbildungen der Erfindung.

Vorzugsweise ist der Magnetanker ringförmig mit einer Durchgangsöffnung gebildet und der nichtmagnetische Bereich umfasst einen ersten axialen Stirnseitenabschnitt, einen zweiten axialen Stirnseitenabschnitt, einen inneren Umfangsabschnitt und einen äußeren Umfangsabschnitt, die eine hohe Beständigkeit gegenüber aggressiven Medien bzw. Resistenz gegenüber weltweit eingesetzten Kraftstoffen aufweisen.

Weiterhin bevorzugt weisen der erste Stirnseitenabschnitt, der zu einem Innenpol gerichtet ist, und der äußere Umfangsabschnitt eine geringere Dicke als eine Dicke des zweiten Stirnseitenabschnitts und eine Dicke des inneren Umfangsabschnitts auf. Aufgrund der geringen Dicken ist eine hohe wirksame Sättigungsinduktion im magnetischen Bereich erreichbar, die in einer Erhöhung der Magnetkraft resultiert.

Weiterhin bevorzugt ist die Dicke des ersten Stirnseitenabschnitts und die Dicke des äußeren Umfangsabschnitts gleich. Dadurch wird eine gute Verschleißfestigkeit gegen die bei einer relativen Reibbewegung des äußeren Umfangsabschnitts an der Ventilhülse auftretende Reibung erreicht. Außerdem ist dadurch eine besonders kompakte Bauform mit minimiertem Bauvolumen des gesamten Kraftstoffeinspritzventils realisierbar. Alternativ können die ersten und zweiten axialen Stirnseitenabschnitte sowie die inneren und äußeren Umfangsabschnitte auch mit der gleichen Dicke ausgeführt werden.

Vorzugsweise weist der innere Umfangsabschnitt die größte Dicke auf. Dadurch wird eine hohe Verschleißfestigkeit gegen Reibung bei der Führung der Ventilnadel auf dem inneren Umfangsabschnitt realisiert, ohne die magnetische Effizienz negativ zu beeinflussen. Alternativ kann auch der zweite Stirnseitenabschnitt mit einer größeren Dicke ausgeführt werden, da dies speziell auf kleinerem Durchmesser ebenfalls magnetisch nicht relevant ist. Ferner erhöht sich in diesen Fällen der Anteil von günstigerem Material, wodurch eine Reduzierung der Gesamtkosten erreichbar ist.

Weiterhin bevorzugt bildet der Magnetanker einen Anschlag an einer ersten und/oder zweiten Ankerstirnseite. Dadurch werden Anschlagflächen am nichtmagnetischen Bereich aus kostengünstigem Material mit hoher Verschleißfestigkeit bereitgestellt. Somit ist eine hohe Robustheit des ersten Stirnseitenabschnitts gegen die beim Anschlag auf dem Innenpol auftretende Stoßbelastung gewährleistet. Ferner wird eine günstige Alternative zu herkömmlichen Beschichtungsverfahren, wie zum Beispiel Hartverchromen, bereitgestellt und die Gefahr eines Anhaftens der Ventilnadel am magnetischen Bereich hierdurch wirksam unterdrückt.

Vorzugsweise ist der magnetische Bereich aus einem Magnetwerkstoff mit hoher Sättigungsinduktion ausgebildet. Hierdurch wird die Verwendung von teurem und schwer zerspanbarem Magnetwerkstoff, wie z. B. aus FeCo oder FeCrCo, gezielt in den Bereichen relevanter Magnetfeldlinien des Magnetankers ermöglicht, die einen signifikanten Beitrag zur Magnetkraft des Magnetankers liefern. Zudem kann durch den Einsatz eines Magnetwerkstoffs, wie z. B. FeCrCo, mit mindestens 13% Cr-Anteil oder alternativ FeCo mit mindestens 35 % Co-Anteil, eine erhöhte Robustheit gegenüber Kraftstoff mit Zusatzstoffen wie Ethanol oder Harnstoff, Korrosion und Kavitation erreicht werden. Weiterhin bevorzugt ist der nichtmagnetische Bereich aus einem Keramikwerkstoff oder einem Hartmetall ausgebildet. Durch die Schutzfunktion des nichtmagnetischen Bereichs wird hierbei eine bei chromhaltigen Materialien, wie z. B. FeCrCo, mögliche Bildung von Cr-Karbiden verhindert, die ursächlich zur Streuung der magnetischen Werte bzw. der Magnetkreise des Magnetankers verantwortlich sind. Dabei kann der Magnetanker als einstückiges Zweikomponenten-Pulverspritzguss-Bauteil sehr kostengünstig bereitgestellt werden.

Vorzugsweise ist der nichtmagnetische Bereich aus kraftstoffbeständigem Material ausgebildet. Weiterhin bevorzugt ist der nichtmagnetische Bereich aus verschleißfestem Material ausgebildet. Aufgrund der Verwendung von kraftstoffbeständigen und/oder verschleißfesten Materialien wird eine verbesserte Dauerhaltbarkeit des Kraftstoffeinspritzventils erreicht.

Vorzugsweise weist der magnetische Bereich 85 bis 95 Gew.% des Gesamtgewichts des Magnetankers auf und der nichtmagnetische Bereich 5 bis 15 Gew.% des Gesamtgewichts des Magnetankers auf. Neben einer deutlichen Kostenreduzierung wird dadurch das bei Hochdruckeinspritzventilen erwünschte Dynamikverhalten aufgrund der erreichbaren Massenreduzierung sowie der geringeren Wirbelstromverluste deutlich verbessert.

### Kurze Beschreibung der Zeichnung

Nachfolgend werden Ausführungsbeispiele der Erfindung unter Bezugnahme auf die begleitende Zeichnung im Detail beschrieben. In der Zeichnung ist:
- Figur 1: eine vergrößerte schematische Schnittansicht eines Kraftstoffeinspritzventils mit einem Magnetanker gemäß einem ersten bevorzugten Ausführungsbeispiel der Erfindung, und
- Figur 2: eine vergrößerte schematische Schnittansicht des Magnetankers gemäß einem zweiten bevorzugten Ausführungsbeispiel der Erfindung.

### Ausführungsformen der Erfindung

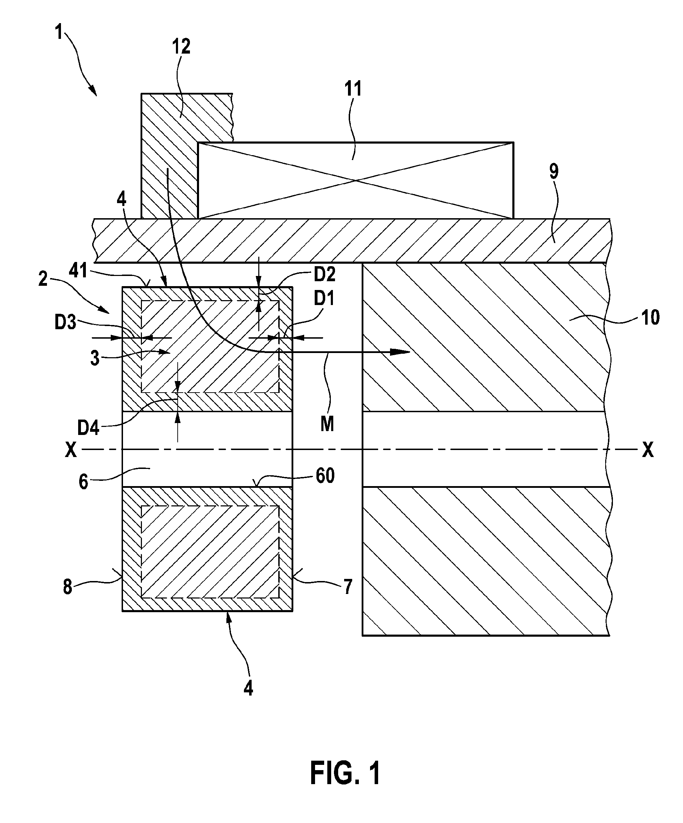

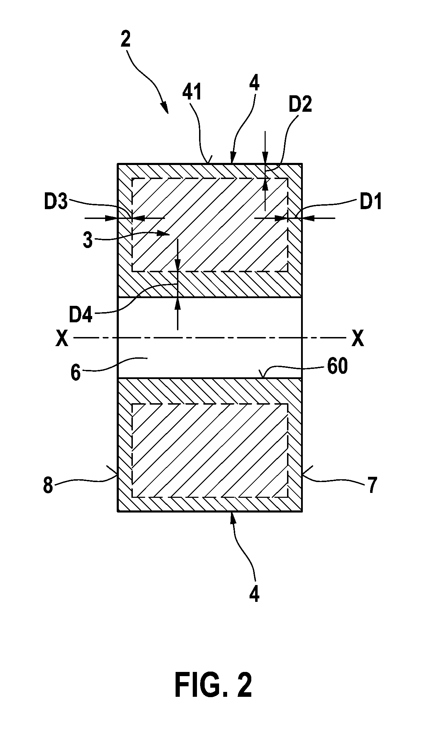

Nachfolgend werden unter Bezugnahme auf die Figuren 1 und 2 bevorzugte Ausführungsbeispiele eines Magnetankers 2 detailliert beschrieben. Gleiche bzw. funktional gleiche Bauteile sind in den Ausführungsbeispielen mit den gleichen Bezugszeichen bezeichnet.

Figur 1 zeigt eine schematische Schnittdarstellung eines Teils eines Kraftstoffeinspritzventils 1 mit einer Ventilhülse 9, an deren Außenseite ein Gehäuse 12 mit einer darin angeordneten Spule 11 fixiert ist. Im Innern der Ventilhülse 9 sind längs einer Mittelachse X-X ein Innenpol 10 sowie ein Magnetanker 2 eines ersten Ausführungsbeispiels angeordnet. Der Magnetanker 2 umfasst einen längs der Mittelachse X-X verlaufenden zylindrischen magnetischen Bereich 3, der von einem nichtmagnetischen Bereich 4 vollständig umschlossen ist. Der einteilige und ringförmig ausgebildete Magnetanker 2 weist ferner (ebenso wie der Innenpol 10) eine Durchgangsöffnung 6 auf, in der eine hier nicht gezeigte Ventilnadel geführt ist. Der magnetische Bereich 3 ist vorzugsweise aus Magnetwerkstoff mit hoher Sättigungsinduktion bei geringer elektrischer Leitfähigkeit, wie zum Beispiel FeCo, ausgebildet. Der nichtmagnetische Bereich 4 ist vorzugsweise aus einem Keramikwerkstoff oder Hartmetall ausgebildet. Die magnetischen und nichtmagnetischen Bereiche 3, 4 sind mittels eines Zweikomponenten-Pulver-Spritzgussverfahrens stoffschlüssig miteinander verbunden.

Wie aus Figur 1 weiter ersichtlich, umfasst der nichtmagnetische Bereich 4 einen ersten axialen Stirnseitenabschnitt 7 mit einer Dicke D1, einen zweiten axialen Stirnseitenabschnitt 8 mit einer Dicke D3, einen inneren Umfangsabschnitt 60 mit einer Dicke D4 und einem äußeren Umfangsabschnitt 41 mit einer Dicke D2. Der erste Stirnseitenabschnitt 8 bildet hierbei einen Anschlag auf dem Innenpol 10. Der Verlauf wirksamer Magnetfeldlinien ist beispielhaft durch eine Magnetfeldlinie M veranschaulicht, die durch die Ventilhülse 9 und den äußeren Umfangsabschnitt 41 in den magnetischen Bereich 3 des Magnetankers 2 eintritt und aus diesem durch den ersten Stirnseitenabschnitt 7 in Richtung zum Innenpol 10 weiter verläuft.

Die Dicke D1 des zum Innenpol 10 gerichteten ersten Stirnseitenabschnitts 7 und die Dicke D2 des äußeren Umfangsabschnitts 41 ist hierbei vorzugsweise geringer bemessen als die Dicke D3 des zweiten Stirnseitenabschnitts 8 und die Dicke D4 des inneren Umfangsabschnitts 60. Aufgrund der geringeren Dicken D1, D2 des ersten Stirnseitenabschnitts 7 und des äußeren Umfangsabschnitts 41, die von den wirksamen Magnetfeldlinien M passiert werden, wird eine verbesserte wirksame Sättigungsinduktion in magnetischen Bereich 3 erreicht, was zu einer Erhöhung der Magnetkraft führt. Die Dicken D1 und D2 können hierbei gleichgroß oder unterschiedlich bemessen sein.

Somit wird ein einstückig und kostengünstig herstellbarer Magnetanker 2 als Zweikomponenten-Pulverspritzguss-Bauteil mit reduzierten Wirbelstromverlusten sowie einer erhöhten magnetischen Effizienz bereitgestellt, bei dem die harte umhüllende Beschichtung in Form des nichtmagnetischen Bereichs 4 den magnetischen Bereich 3 gegen einen Kontakt mit Kraftstoff schützt. Außerdem wird gleichzeitig ein robuster und verschleißresistenter Ankeranschlag auf einer der ersten und/oder zweiten Stirnseitenabschnitte 7 bzw. 8 ohne Kontakt mit dem magnetischen Bereich 3 realisiert. Ferner kann der innere Umfangsabschnitt 60 der Durchgangsöffnung 6 als verschleißfeste Schicht zur Führung der Ventilnadel im Magnetanker 2 fungieren. Somit wird dadurch eine besonders lange Dauerhaltbarkeit des Kraftstoffeinspritzventils erreicht, die auch einen Einsatz unter erschwerten Bedingungen problemlos ermöglicht.

Im Gegensatz zum zuvor beschriebenen ersten Ausführungsbeispiel weist beim Magnetanker 2 des zweiten Ausführungsbeispiels von Figur 2 der innere Umfangsabschnitt 60 die Dicke D4 auf, die größer als die Dicken D1, D2, D3 des ersten Stirnseitenabschnitts 7, des äußeren Umfangsabschnitts 41 bzw. des zweiten Stirnseitenabschnitts 8 ist. Hierdurch können größere Teile des Magnetankers 2 aus kostengünstigem und leichtem nichtmagnetischen Werkstoff hergestellt werden, ohne den im magnetischen Bereich 3 wirksamen Magnetfeldlinienverlauf negativ zu beeinflussen. Somit wird eine weitere Minimierung des magnetischen Bereichs 3 und somit des Gewichts und der Gesamtkosten des Magnetankers 2 erreicht. Die magnetischen und nichtmagnetischen Bereiche 3, 4 des Magnetankers 2 sind gleichermaßen wie beim ersten Ausführungsbeispiel stoffschlüssig mittels des ZweikomponentenPulver-Spritzgussverfahrens miteinander verbunden.

Wie in allen Ausführungsbeispielen gezeigt, können somit einstückige Magnetanker 2 als Zweikomponenten-Pulverspritzguss-Bauteile für die erfindungsgemäßen Magnetanker 2 besonders wirtschaftlich in einem einzigen Fertigungsprozess gefertigt werden, was mit konventionellen Fertigungsverfahren nicht erreichbar ist. Neben einer deutlich verbesserten Kosteneffizienz wird hierdurch insbesondere das bei Hochdruckeinspritzventilen gewünschte und erforderliche Dynamikverhalten entsprechend der erreichbaren Massenreduzierung sowie der verringerten Wirbelstromverluste deutlich verbessert, was zu einem erheblich verringerten Kraftstoffverbrauch und verbesserten Emissionsverhalten des Motors beiträgt. Ferner sind die in den zuvor beschriebenen Ausführungsbeispielen veranschaulichten Bauartvarianten beliebig kombinierbar.

## Patentansprüche

1. Magnetanker für ein Einspritzventil umfassend:
- wenigstens einen magnetischen Bereich (3) und wenigstens einen nichtmagnetischen Bereich (4),
- wobei der Magnetanker (2) als einstückiges Bauteil ausgebildet ist,
- wobei die magnetischen und nichtmagnetischen Bereiche (3, 4) stoffschlüssig mittels eines Zweikomponenten-Pulver-Spritzgussverfahrens miteinander verbunden sind,
**dadurch gekennzeichnet,**
**dass** der magnetische Bereich (3) vom nichtmagnetischen Bereich (4) vollständig umschlossen ist.

2. Magnetanker nach Anspruch 1, **dadurch gekennzeichnet, dass** der Magnetanker (2) ringförmig mit einer Durchgangsöffnung (6) gebildet ist und der nichtmagnetische Bereich (4) einen ersten axialen Stirnseitenabschnitt (7), einen zweiten axialen Stirnseitenabschnitt (8), einen inneren Umfangsabschnitt (60) und einen äußeren Umfangsabschnitt (41) umfasst.

3. Magnetanker nach Anspruch 2, **dadurch gekennzeichnet, dass** der erste Stirnseitenabschnitt (7), der zu einem Innenpol (10) gerichtet ist, und der äußere Umfangsabschnitt (41) eine geringere Dicke (D1, D2) als eine Dicke (D3) des zweiten Stirnseitenabschnitts (8) und eine Dicke (D4) des inneren Umfangsabschnitts (60) aufweisen.

4. Magnetanker nach einem der vorhergehenden Ansprüche, **dadurch gekennzeichnet, dass** die Dicke (D1) des ersten Stirnseitenabschnitts (7) und die Dicke (D2) des äußeren Umfangsabschnitts (41) gleich ist.

5. Magnetanker nach einem der Ansprüche 2 bis 4, **dadurch gekennzeichnet, dass** der innere Umfangsabschnitt (60) die größte Dicke (D4) aufweist.

6. Magnetanker nach einem der vorhergehenden Ansprüche, **dadurch gekennzeichnet, dass** der Magnetanker (2) einen Anschlag an einer ersten und/oder zweiten Ankerstirnseite (7, 8) bildet.

7. Magnetanker nach einem der vorhergehenden Ansprüche, **dadurch gekennzeichnet, dass** der magnetische Bereich (3) aus einem Magnetwerkstoff mit hoher Sättigungsinduktion ausgebildet ist und der nichtmagnetische Bereich (4) aus einem Keramikwerkstoff oder einem Hartmetall ausgebildet ist.

8. Magnetanker nach einem der vorhergehenden Ansprüche, **dadurch gekennzeichnet, dass** der nichtmagnetische Bereich (4) aus kraftstoffbeständigem Material ausgebildet ist.

9. Magnetanker nach einem der vorhergehenden Ansprüche, **dadurch gekennzeichnet, dass** der nichtmagnetische Bereich (4) aus verschleißfestem Material ausgebildet ist.

10. Magnetanker nach einem der vorhergehenden Ansprüche, **dadurch gekennzeichnet, dass** der magnetische Bereich (3) 85 bis 95 Gew.% des Gesamtgewichts des Magnetankers (2) aufweist und der nichtmagnetische Bereich (4) 5 bis 15 Gew.% des Gesamtgewichts des Magnetankers (2) aufweist.

## Claims

1. Magnet armature for an injection valve, comprising:
- at least one magnetic region (3) and at least one non-magnetic region (4),
- wherein the magnet armature (2) is in the form of a unipartite component,
- wherein the magnetic and non-magnetic regions (3, 4) are connected to one another cohesively by means of a two-component powder injection moulding process,
**characterized**
**in that** the magnetic region (3) is completely enclosed by the non-magnetic region (4).

2. Magnet armature according to Claim 1, **characterized in that** the magnet armature (2) is of annular form with a passage opening (6), and the non-magnetic region (4) comprises a first axial face side section (7), a second axial face side section (8), an inner circumferential section (16) and an outer circumferential section (41).

3. Magnet armature according to Claim 2, **characterized in that** the first face side section (7), which is directed toward an inner pole (10), and the outer circumferential section (41) have a thickness (D1, D2) smaller than a thickness (D3) of the second face side section (8) and than a thickness (D4) of the inner circumferential section (60).

4. Magnet armature according to one of the preceding claims, **characterized in that** the thickness (D1) of the first face side section (7) and the thickness (D2) of the outer circumferential section (41) are equal.

5. Magnet armature according to one of Claims 2 to 4, **characterized in that** the inner circumferential section (16) has the greatest thickness (D4).

6. Magnet armature according to one of the preceding claims, **characterized in that** the magnet armature (2) forms a stop at a first and/or second armature face side (7, 8).

7. Magnet armature according to one of the preceding claims, **characterized in that** the magnetic region (3) is formed from a magnetic material with high saturation induction, and the non-magnetic region (4) is formed from a ceramic material or a hard metal.

8. Magnet armature according to one of the preceding claims, **characterized in that** the non-magnetic region (4) is formed from fuel-resistant material.

9. Magnet armature according to one of the preceding claims, **characterized in that** the non-magnetic region (4) is formed from wear-resistant material.

10. Magnet armature according to one of the preceding claims, **characterized in that** the magnetic region (3) accounts for 85 to 95 wt% of the total weight of the magnet armature (2), and the non-magnetic region (4) accounts for 5 to 15 wt% of the total weight of the magnet armature (2).

## Revendications

1. Induit magnétique pour une soupape d'injection, comprenant :
- au moins une zone magnétique (3) et au moins une zone non magnétique (4),
- l'induit magnétique (2) étant réalisé sous forme de composant d'une seule pièce,
- les zones magnétique et non magnétique (3, 4) étant connectées l'une à l'autre par liaison de matière au moyen d'un procédé de moulage par injection de poudre à deux composants,
**caractérisé en ce que**
la zone magnétique (3) est complètement entourée par la zone non magnétique (4).

2. Induit magnétique selon la revendication 1, **caractérisé en ce que** l'induit magnétique (2) est formé sous forme annulaire avec une ouverture de passage (6) et la zone non magnétique (4) comprend une première portion de côté frontal axiale (7), une deuxième portion de côté frontal axiale (8), une portion périphérique intérieure (60) et une portion périphérique extérieure (41).

3. Induit magnétique selon la revendication 2, **caractérisé en ce que** la première portion de côté frontal (7) qui est orientée vers un pôle interne (10) et la portion périphérique extérieure (41) présentent une plus faible épaisseur (D1, D2) qu'une épaisseur (D3) de la deuxième portion de côté frontal (8) et qu'une épaisseur (D4) de la portion périphérique intérieure (60).

4. Induit magnétique selon l'une quelconque des revendications précédentes, **caractérisé en ce que** l'épaisseur (D1) de la première portion de côté frontal (7) et l'épaisseur (D2) de la portion périphérique extérieure (41) sont identiques.

5. Induit magnétique selon l'une quelconque des revendications 2 à 4, **caractérisé en ce que** la portion périphérique intérieure (60) présente la plus grande épaisseur (D4).

6. Induit magnétique selon l'une quelconque des revendications précédentes, **caractérisé en ce que** l'induit magnétique (2) forme une butée au niveau d'un premier et/ou d'un deuxième côté frontal d'induit (7, 8).

7. Induit magnétique selon l'une quelconque des revendications précédentes, **caractérisé en ce que** la zone magnétique (3) est réalisée en un matériau magnétique ayant une induction de saturation élevée et la zone non magnétique (4) est réalisée en un matériau en céramique ou un métal dur.

8. Induit magnétique selon l'une quelconque des revendications précédentes, **caractérisé en ce que** la zone non magnétique (4) est réalisée en un matériau résistant au carburant.

9. Induit magnétique selon l'une quelconque des revendications précédentes, **caractérisé en ce que** la zone non magnétique (4) est réalisée en un matériau résistant à l'usure.

10. Induit magnétique selon l'une quelconque des revendications précédentes, **caractérisé en ce que** la zone magnétique (3) présente 85 à 95 % en poids du poids total de l'induit magnétique (2) et la zone non magnétique (4) présente 5 à 15 % en poids du poids total de l'induit magnétique (2).
